# EUROPÄISCHE PATENTSCHRIFT

(11) **EP 0 813 722 B1**
(45) Veröffentlichungstag und Bekanntmachung des Hinweises auf die Patenterteilung: **09.09.1998**
(21) Anmeldenummer: 96904753.9
(22) Anmeldetag: 07.03.1996
(51) Int. Cl.: G07F 7/10

(54) **LIZENZKARTENGESTEUERTES CHIPKARTENSYSTEM**
LICENCE-CARD-CONTROLLED CHIP CARD SYSTEM
SYSTEME DE CARTE A PUCE COMMANDEE PAR CARTE DE LICENCE

(30) Priorität: 10.03.1995 DE 19508722
(43) Veröffentlichungstag der Anmeldung: 29.12.1997
(73) Patentinhaber: SIEMENS AKTIENGESELLSCHAFT, 80333 München (DE)
(72) Erfinder: WEINLÄNDER, Markus, D-91230 Happurg (DE)
(86) Internationale Anmeldenummer: DE9600422
(87) Internationale Veröffentlichungsnummer: WO9628793

(56) Entgegenhaltungen:
- EP-A- 0 574 219
- EP-A- 0 593 244
- EP-A- 0 636 998
- WO-A-90/05960
- WO-A-92/08211
- US-A- 4 855 578

## Beschreibung

Chipkarten finden in stark steigendem Maße in unterschiedlichsten Bereichen des täglichen Lebens Anwendung. Dementsprechend sind sehr große Mengen derselben im Umlauf. Üblicherweise sind eine Vielzahl von Maßnahmen vorgesehen, um nach der Ausgabe der Chipkarte, d.h. während der normalen Benutzung, Vermögensschäden insbesondere für den jeweiligen Kartenbesitzer zu vermeiden. So muß z.B. nach einem Kartenverlust zumindest eine unbefugten Benutzung der Karte durch beliebige Dritte verhindert werden.

Aufgrund der steigenden mengenmäßigen Verbreitung müssen aber auch Maßnahmen vorgesehen werden, um einerseits insbesondere größere Kartenmengen bereits vor deren einzelner Ausgabe an die Endkunden zu schützen, und andererseits die Menge der legal an Endkunden ausgegebenen bzw. z.B. pro Zeitraum oder einem an einen Lizenzgeber bzw. Dienstleistungsbereitsteller aktuell entrichteten Vergütungsbetrag maximal ausgebbaren Karten zu überwachen bzw. zu begrenzen.

So werden Karten z.B. in u.U. sehr großen Mengen von einem Kartenhersteller an einen Verteiler von Karten, z.B. an ein Geldinstitut geschickt. Dieser Weg ist vergleichbar mit dem Transport von größeren Geldmengen zwischen Banken, und somit entsprechend gefährdet. Ferner ist es vielfach wünschenswert, auch auf Seiten des Verteilers von Karten, die Anzahl der z.B. pro Angestellten an Endkunden herausgebbaren Karten genau zu überwachen, zu dokumentieren und zu begrenzen, um auch hierbei die Gefahr von Mißbrauch möglichst auszuschließen. Da in der Regel mit der Abgabe einer Karte an einen Endkunden die Inanspruchnahme von Leistungen durch diesen ermöglicht wird, können durch Chipkarten, welche unter Umständen in erhöhter Menge unzulässigerweise in den Umlauf gebracht worden sind, erhebliche Vermögensschaden entstehen.

Im Dokument DE 30 41 393 C2 ist ein Verfahren zum Erstellen einer vorgegebenen Anzahl von ein Speichermedium aufweisenden Berechtigungskarten dargestellt. Mittels einer Stammkarte und einer ersten Aktivierungsstation wird eine begrenzte Anzahl von Berechtigungskarten aktiviert. Die Aktivierung der Berechtigungskarten erfolgt nur, wenn die im Speicher der Stammkarte gespeicherte Anzahl der freischaltbaren Berechtigungskarten noch nicht erschöpft ist. Nach jedem Freischaltvorgang erfolgt im Speicher der Stammkarte eine Dekrementierung der Anzahl freischaltbarer Berechtigungskarten. Zusatzlich kann in den Berechtigungskarten ein weiterer Berechtigungsumfang festgelegt werden, womit mittels einer zweiten Aktivierungsstation eine vorgesehene Anzahl weiterer Karten aktivierbar sind.

Nach den Dokumenten US-A-4,855,578 und WO-A-90/05960 muß bei der Personalisierung der Anwenderchipkarte ein Anwenderprogramm in letztere übertragen werden, um funktionsfähig zu werden.

Der Erfindung liegt die Aufgabe zugrunde, ein Chipkartensystem mit möglichst hoher Daten- und Fälschungssicherheit zum Erstellen einer vorgegebenen Anzahl von Chipkarten anzugeben.

Die Aufgabe wird gelöst mit dem im Anspruch 1 angegebenen Chipkartensystem. Vorteilhafte weitere Ausgestaltungen desselben sind in den Unteransprüchen enthalten.

Die Erfindung und vorteilhafte weitere Ausgestaltungen desselben werden anhand der nachfolgend kurz angeführten Figuren näher erläutert. Dabei zeigt
- Fig.1: ein schematisches Strukturbild des erfindungsgemäßen Chipkartensystems, und
- Fig.2: eine bevorzugte Ausführungsform des Chipkartensystems, bei der zur Freischaltung einer Anwenderchipkarte ein von dessen Betriebssystem für die Ausführung von Anwenderbefehlsanweisungen benötigten Freigabedatensatzes in den nichtflüchtigen Speicher geladen wird.

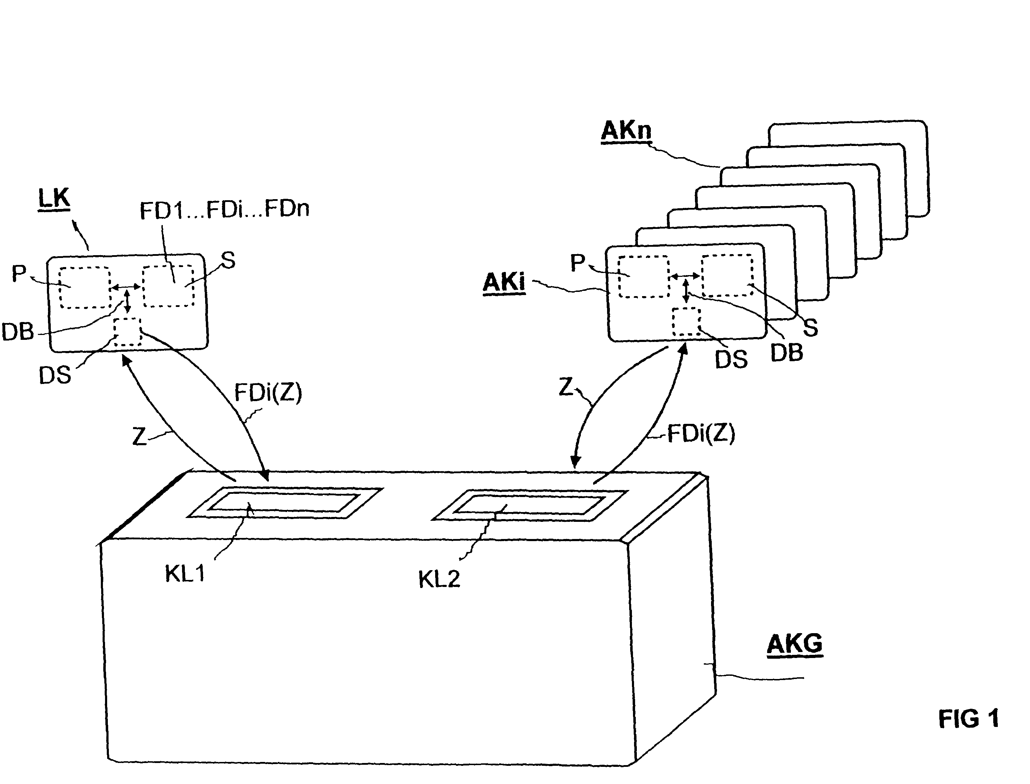

Das erfindungsgemäße Chipkartensystem verfügt prinzipiell über zwei Typen von Chipkarten. Zum einen sind sogenannte Anwenderchipkarten AKn in der Regel in einer sehr großen Vielzahl vorhanden. Im Beispiel der Figur 1 sind einige davon rechts oben aufgefächert dargestellt, wobei zur weiteren Erläuterung auf die im Vordergrund dargestellte Anwenderchipkarte AKi Bezug genommen wird. Erfindungswesentlich ist ein weiterer Chipkartentyp vorhanden, welcher die Funktion einer Freischaltkarte hat und im Folgenden als sogenannte Lizenzkarte bezeichnet werden soll. Von diesem Chipkartentyp sind naturgemäß nur sehr wenige im Besitz von ausgewählten, besonders legitimierten Personen. Möglicherweise ist sogar nur eine einzige derartige Karte im Umlauf. Im Beispiel der Figur 1 ist eine derartige Lizenzchipkarte LK links oben dargestellt.

Vorteilhaft sind alle Karten des Chipkartensystems hardwaremäßig identisch, und unterscheiden sich in der Art des jeweils ausführbaren Anwenderprogrammes. Hierdurch wird die Herstellung der Chipkarten des Systems erheblich vereinfacht. Dementsprechend verfügen im Beispiel der Figur 1 sowohl die Anwenderchipkarten AKi als auch die beispielhaft eine Lizenzchipkarte LK über die gleichen Hardwareelemente. Diese sind jeweils im wesentlichen ein interner Prozessor P, ein nichtflüchtiger Speicher S zumindest zur Aufnahme für ein Betriebssystem des Prozessors P, eine Schnittstelle DS zum Datenaustausch mit einer Schreib-Lesestation AKG, welche z.B. in Form eines Kontaktfeld zum berührungsbehafteten Datenaustausch oder in Form einer Antenne zum berührungslosen Datenaustausch ausgeführt sein kann, und chipkarteninterner Datenbus DS.

Gemäß der Erfindung sind die Anwenderchipkarten AKn so organisiert, daß deren Prozessor P jeweils erst nach einer Freischaltung Anwenderbefehlsanweisungen ausführen kann, während im nichtflüchtigen Speicher S der zumindest einen Lizenzkarte LK eine begrenzbare Anzahl von freischaltbaren Anwenderchipkarten AKn verwaltbar ist. Schließlich verfügt das erfindungsgemäße Chipkartensystem über mindestens eine Schreib-Lesestation AKG für Chipkarten LK bzw. AKn, worüber in einer Anwenderchipkarte AKi die Freischaltung des internen Prozessors P wirkt wird, wenn im Speicher S der Lizenzkarte LK die maximale Anzahl der freischaltbaren Anwenderchipkarten Akn noch nicht erschöpft ist. Nach einer erfolgreichen Freischaltung wird im Speicher S der Lizenzchipkarte LK wiederum mit Hilfe der Schreib-Lesestation AKG eine Dekrementierung der Anzahl freischaltbarer Anwenderchipkarten Akn bewirkt.

Zum Datenaustausch zwischen einer Lizenzchipkarte LK und einer aktuell zu bearbeitenden Anwenderchipkarte AK müssen beide Chipkarten z.B. bei einer berührungslosen Datenübertragung in den Sendebereich der Schreib-Lesestation AKG gebracht werden. Bei einem berührungsbehafteten Datenaustausch kann es notwendig sein, die Chipkarten u.U. sukzessive mehrmals abwechselnd in die Schreib-Lesestation AKG einzuführen und wieder zu entnehmen. Bei der in Figur 1 dargestellten Ausführung weist die Schreib-Lesestation AKG beispielsweise zwei Kartenleseeinheiten auf. Die erste Kartenleseeinheit KL1 dient zur Aufnahme der Lizenzchipkarte LK, während die zweite Kartenleseeinheit KL2 zur Aufnahme einer Anwenderchipkarte AKi dient. In einem solchen Fall ist für eine Freischaltung einer Anwenderchipkarte vorteilhaft kein Wechsel von Chipkarten notwendig.

Bei einer bevorzugten Ausführungsform der Erfindung wird vom Prozessor P einer Anwenderchipkarte AKi zur Auslösung einer Freischaltung zunächst eine Zufallszahl Z erzeugt und mittels der Schreib-Lesestation AKG an die Lizenzchipkarte LK übertragen. Ein derartiger Fall ist im Beispiel der Figur 1 mit Hilfe von gekrümmten Pfeilen dargestellt, welche die jeweilige Richtung des Datenüberganges zwischen der Datenschnittstelle DS der jeweiligen Chipkarte und der Schreib-Lesestation AKG anzeigen. So wird eine Zufallszahl Z von der Anwenderchipkarte AKi über die Kartenleseeinheit KL2 gelesen, und mittels der in den Speicher S der Lizenzchipkarte LK geladen.

Vom Prozessor P der Lizenzchipkarte LK wird dann für den Fall, daß die Anzahl der im nichtflüchtigen Speicher S enthaltenen, freischaltbaren Anwenderchipkarten Akn noch nicht erschöpft ist, eine von der jeweiligen Zufallszahl abhängige Freigabekennung FDi(Z) generiert, über die Kartenleseeinheit KL1 in die Schreib-Lesestation AKG geladen und schließlich über die Kartenleseeinheit KL2 in die Anwenderchipkarte AKi rückgeschrieben. Vom Prozessor P der Anwenderchipkarte AKi wird die Freigabekennung FDi auf Korrespondenz mit der Zufallszahl überprüft und bei positivem Ausgang der Prüfung eine Aktivierung des gesamten Satz zulässiger Anwenderbefehlsanweisungen bewirkt. Für den Fall, daß die Anzahl freigebbarer Anwenderchipkarten verbraucht ist, wird von der Lizenzchipkarte entweder kein Freigabekennung oder eine ungültige, d.h. in z.B. einer unzulässigen Weise mit der Zufallszahl verknüpfte Freigabekennung an die anfordernde Anwenderchipkarte übermittelt.

Bei dieser Ausführung der Erfindung aktivieren sich somit die Anwenderchipkarten AKn nach erfolgreichem Empfang einer zulässigen Freigabekennung selbst.

Die Erfindung weist somit den doppelten Vorteil auf, daß Anwenderchipkarten einerseits vor einer Freischaltung vollkommen unbrauchbar sind, und andererseits die Freischaltung von Anwenderchipkarten mit Hilfe des Systems der Lizenzchipkarte in einem eng begrenzbaren Rahmen genau überwachbar ist.

Bei einer anderen Ausführung des erfindungsgemäßen Chipkartensystems erfolgt die Freischaltung einer Anwenderchipkarte AKi durch Übertragung eines vom Betriebssystem für die Ausführung von Anwenderbefehlsanweisungen benötigten Freigabedatensatzes in den nichtflüchtigen Speicher der Anwenderchipkarte AKi über die Schreib-Lesestation AKG. In diesem Fall sind die Anwenderchipkarten nicht in der Lage, sich selbst zu aktivieren. Vielmehr wird der Freigabedatensatz für die Erreichung der vollen Funktionsfähigkeit zwingend benötigt.

In diesem Fall wird vom Prozessor P einer Anwenderchipkarte AKi zur Auslösung einer Freischaltung vorteilhaft wiederum zunächst eine Anforderung auf Übermittlung eines Freigabedatensatzes FDi mittels der Schreib-Lesestation AK an die Lizenzchipkarte (LK) übertragen. Vom Prozessor P der Lizenzchipkarte LK wird dann für den Fall, daß die Anzahl freischaltbarer Anwenderchipkarten AKn im nichtflüchtigen Speicher S noch nicht erschöpft ist, ein Freigabedatensatz FDi abgerufen bzw. generiert und wiederum mittels der Schreib-Lesestation AKG an die Anwenderchipkarte AKi übertragen. Dieser wird vom Prozessor P der Anwenderchipkarte AKi schließlich zur Ermöglichung des Betriebs des gesamten Satzes zulässiger Anwenderbefehlsanweisungen des Betriebssystems in den zumindest das Betriebssystem der Anwenderchipkarte AKi enthaltenden nichtflüchtigen Speicher S ordnungsgemäß eingebunden.

Bei diese Ausführung der Erfindung ist die Sicherheit gegenüber unzulässigen Manipulationen weiter verbessert, da die Anwenderchipkarten ohne einen gegebenenfalls zusätzlich auf die jeweilige Anwenderchipkarte individualisierte Freigabedatensatz datentechnisch keinesfalls funktionsfähig sind und somit auch nicht in einer unbefugten Weise freigeschaltet werden können.

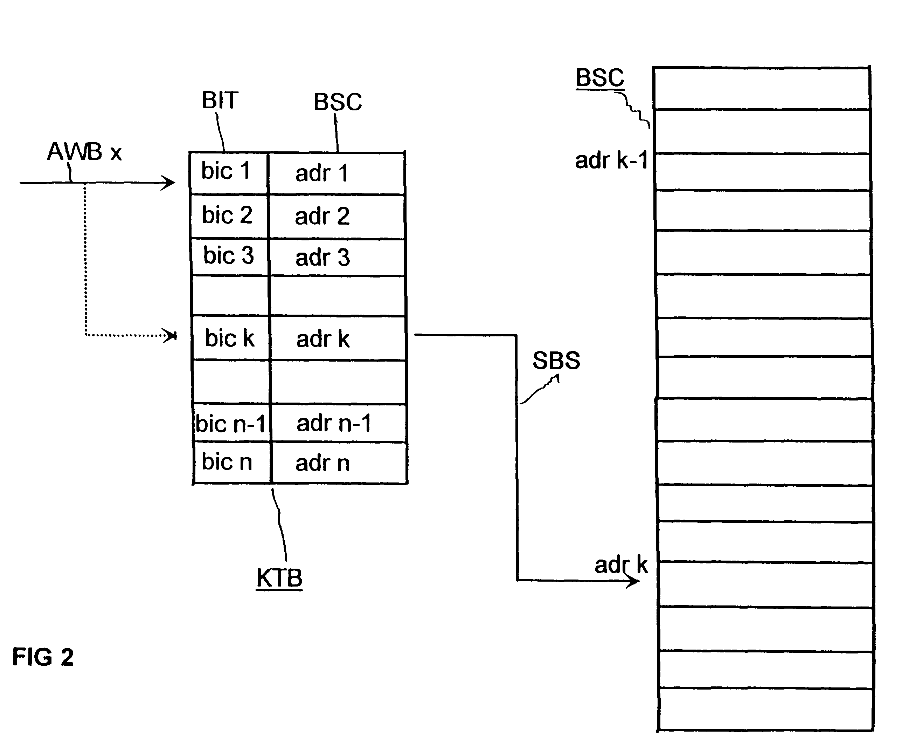

Diese Ausführung des erfindungsgemäßen Chipkartensystems wird nächfolgend unter Heranziehung des Beispieles von Figur 2 näher erläutert. Dabei dient als Freigabedatensatz bevorzugt eine betriebssystemspezifische Kommandotabelle KTB im nichtflüchtigen Programmspeicher S des Prozessors dient, womit die Zuordnung adr1 ... adr k ... adrn von Anwenderbefehlsanweisungen AWBx zu den diese jeweils ausführenden Teilen des Betriebssystems BSC der Anwenderchipkarte AKi hergestellt wird.

Darüber hinausgehend kann es vorteilhaft sein, wenn der interne Prozessor P und ein zur Aufnahme eines Betriebssystems zum Betrieb des Prozessors P, und hierüber wiederum gegebenenfalls weiterer Funktionselemente der Anwenderchipkarte, wie z.B. Energieversorgung, Datenschnittstelle zum Austausch von Daten zwischen der Chipkarte und externen Schreib- und Lesestationen u.dgl., dienender nichtflüchtigter Programmspeicher S so aufeinander abgestimmt, daß die Anwenderchipkarte nach ihrer Herstellung nur eine Befehlsanweisung ausführen kann, wenn sie erstmalig mit einer Schreib-Lesestation in datentechnische Verbindung gebracht wird. Diese Befehlsanweisung bewirkt das Nachladen einer betriebssystemspezifischen Kommandotabelle in den nichtflüchtigen Speicher des Prozessors. Erst nach erfolgreicher Beendigung dieser Ladeoperation ist eine Zuordnung von weiteren, insbesondere über externe Schreib-Lesestationen der Anwenderchipkarte zugeführten Anwenderbefehlsanweisungen zu den für deren Ausführung vorgesehenen, jeweiligen Betriebssystemteilen möglich. Die Ausführung der für eine ordnungsgemäße Funktionsfähigkeit der Anwenderchipkarte gehörigen Befehlsanweisungen in Bezug auf alle während der Normalnutzung maximal möglichen Operationen ist somit erst nach Einbindung der Kommandotabelle möglich.

Diese Ausführung bietet den Vorteil, daß u.U. auch sehr große Mengen frisch hergestellter Anwenderchipkarten nahezu vollkommen unbrauchbar sind. Die Ermöglichung der Gebrauchsfertigkeit erfolgt vielmehr separat für jede einzelne Chipkarte meist erst unmittelbar vor deren Übergabe an den berechtigten Endbenutzer. Neu hergestellte Chipkarten, in deren nichtflüchtigem Speicher bzw. anderen Speicherbereichen zwar die Codierung der aufeinanderfolgenden Betriebssystembefehlsanweisungen geladen ist, sind deswegen nicht funktionsfähig, weil aufgrund der fehlenden Kommandotabelle eingehende Anwenderbefehlsanweisungen nicht identifiziert und der bzw. die zu deren Ausführung benötigten Betriebssystemteile wegen der nicht vorhandenen, dazugehörigen Verzweigadressen nicht aktiviert werden können. Praktisch ist es mit vernünftigem Zeit- und Mittelaufwand nahezu nicht möglich, in der Art eines Reverse-Engineering die funktionelle Struktur des Betriebssystems so zu rekonstruieren, daß die zur Ausführung einzelner Anwenderbefehlsanweisung gehörigen Teile und deren mögliche Wechselwirkungen in Form von Einsprungadressen zugänglich werden.

Die Gestaltung einer Anwenderchipkarte gemäß dieser Ausführung der Erfindung bietet den Vorteil, daß die Chipkarte vor deren Autorisierung durch Nachladen der Kommandotabelle meist unmittelbar vor Übergabe in den Herrschaftsbereich des neuen Besitzers nahezu gegen jede Art von unbefugtem Gebrauch geschützt ist, ohne daß aufwendige Maßnahmen im Hard- oder Softwarebereich der Chipkarte vorgesehen werden müßten, welche die Herstellung der Chipkarte verteuern und deren Gebrauchsfähigkeit möglicherweise einschränken würden. Einerseits ist auf einfache Weise möglich, die Chipkarte zur alleinigen Ausführbarkeit des Ladebefehls für die Kommandotabelle zu ertüchtigen. Andererseits bereitet das Nachladen der Kommandotabelle datentechnisch für eine befugterweise im Besitz des Codes der Kommandotabelle befindliche Einrichtung, wie z.B. eine Bank, keinerlei Probleme. Bei diesem Vorgang können bei Bedarf gleichzeitig auch beliebige weitere, die jeweilige Chipkarte z.B. bezüglich des neuen Benutzers individualisierende Daten übertragen werden.

Neben der Verhinderung unbefugter Benutzung von Anwenderchipkarten vor deren Übergabe in den normalen Gebrauch wird durch die Erfindung auch unterbunden, daß in dieser Zwischenphase in den bei der Herstellung auf die Anwenderchipkarten aufgebrachten Programmcode selbst, insbesondere der Code des Betriebssystems, in unbefugter Weise Einsicht genommen bzw. dieser unbefugt oder unprofessionell verändert wird.

Zur Erläuterung ist auf der rechten Seite der Figur 2 beispielhaft in anschaulicher Tabellenform ein Ausschnitt aus der Sequenz der aufeinanderfolgenden Anweisungen eines Betriebssystemcodes BSC dargestellt. Dabei ist gedanklich die Tabelle sowohl nach oben als auch nach unter fortzusetzen. Der Ausschnitt zeigt beispielhaft eine vorangehende Einsprungadresse adr k-1 und eine darauf folgende Einsprungadresse adr k. Die einer dieser Einsprungsadressen zugeordnete Zeile des Betriebssystembefehlscodes und die bis zur nächsten Einsprungadresse darauf folgenden Zeilen des Betriebssystembefehlscodes bilden eine Gruppe, welche die Ausführung eines bestimmten Anwenderkommandos bewirkt.

Im Beispiel der Figur 2 wird der Anwenderchipkarte ein aktuelles Anwenderkommando AWB x bevorzugt von einer externen Schreib-Lesestation zugeführt. Dieses soll vom Betriebssystem ausgeführt werden. Hierzu wird eine Kommandotabelle KTB benötigt, welche quasi einen den Zugang zu den funktionellen Teileinheiten des Betriebssystems BSC ermöglichenden Schlüssel darstellt. Beispielhaft besteht jede Zeile der Kommandotabelle KTB aus einem ersten Codeteil bic k, welcher zur Interpretation, d.h. zur Erkennung des Typs, des aktuellen Anwenderkommandos AWB x dient, und aus einem zweiten Codeteil adr k, welcher die Startadresse der dazugehörigen Betriebssystembefehlssequenz enthält. Die Kommandotabelle KTB besteht somit aus einer ersten Teiltabelle BIT, welche die zur Befehlsinterpretation dienenden Codes bic 1, bic 2, bic 3 ... bic k ... bic n-1, bic n enthält, und aus einer zweiten Teiltabelle BSC, welche die dazugehörigen Einsprungsadressen adr 1, adr 2, adr 3 ... adr k ... adr n-1, adr n der entsprechenden Betriebssystemsequenzen enthält.

Bei dem in der Figur 2 dargestellten Beispiel wird ein mit AWB x bezeichnetes Anwenderkommando der Anwenderchipkarte zugeführt. Dieses wird durch die Codierung bic k als zulässiger Befehl erkannt, was in der Figur durch eine strichlierte Linie auf der linken Seite der Kommandotabelle KTB dargestellt ist. Nun wird die dazugehörige Einsprungadresse adr k aktiviert und hierdurch der Code des Betriebssystems BSC von Beginn bei der Einsprungadresse adr k an ausgeführt. In der Figur ist der Aufruf der zum Anwenderkommando AWB x gehörenden Betriebssystemsequenz durch einen von der entsprechenden Zelle der Kommandotabelle KTB bis zur Einsprungadresse adr k verlaufenden Pfeil SBS dargestellt. Es ist zu erkennen, daß ohne die Brückenfunktion einer Kommandotabelle KTB kein Anwenderkommando AWB x ausführbar ist, da keine Zuordnung desselben zu dem dazugehörigen Teil des Betriebssystems möglich ist. Diese erfindungsgemäße Ausgestaltung einer Anwenderchipkarte stellt somit einen außerordentlich wirksamen Schutz gegen unbefugte Benutzung frisch hergestellter Chipkarten dar.

Schließlich kann der Datenaustausch zwischen einer Anwenderchipkarte AKi und der Lizenzchipkarte (LK mittels der Schreib-Lesestation AKG vorteilhaft in einer kryptologisch verschlüsselten Form erfolgen.

## Patentansprüche

1. Anordnung mit Chipkarten (AK,LK), die jeweils mindestens einen internen Prozessor (P), mindestens eine Schreib-Lese-station (AKG) für Chipkarten (LK) und einen nichtflüchtigen Speicher (S) zumindest für ein Betriebssystem des Prozessors (P) aufweisen, mit
a) einer Vielzahl von Anwenderchipkarten (AKn), deren Prozessor (P) jeweils erst nach einer Freischaltung Anwenderbefehlsanweisungen ausführen kann,
b) zumindest einer Lizenzchipkarte (LK), in deren nichtflüchtigen Speicher (S) eine begrenzbare Anzahl von freischaltbaren Anwenderchipkarten (AKn) verwaltbar ist,
**dadurch gekennzeichnet,** daß
c) über die Schreib-Lesestation (AKG)
c1) vom Prozessor (P) einer Anwenderchipkarte (AKi) zur Auslösung einer Freischaltung zunächst eine Zufallszahl (Z) erzeugt und mittels der Schreib-Lesestation (AKG) an die Lizenzchipkarte (LK) übertragen wird,
c2) vom Prozessor (P) der Lizenzchipkarte (LK) für den Fall, daß die Anzahl freischaltbarer Anwenderchipkarten (Akn) im Speicher (S) noch nicht erschöpft ist, eine von der jeweiligen Zufallszahl (Z) abhängige Freigabekennung (FDi(Z)) generiert und mittels der Schreib-Lesestation (AKG) an die Anwenderchipkarte (AKi) übertragen wird, und
c3) vom Prozessor (P) der Anwenderchipkarte (AKi) die Freigabekennung (FDi(Z)) auf Korrespondenz mit der Zufallszahl (Z) überprüft und bei positivem Ausgang der Prüfung eine Aktivierung des gesamten Satz zulässiger Anwenderbefehlsanweisungen bewirkt wird, und
c4) im Speicher (S) der Lizenzchipkarte (LK) eine Dekrementierung der Anzahl freischaltbarer Anwenderchipkarten (Akn) bewirkt wird.

2. Anordnung nach Anspruch 1, wobei
a) vom Prozessor (P) einer Anwenderchipkarte (AKi) zur Auslösung einer Freischaltung zunächst eine Anforderung auf Übermittlung eines Freigabedatensatzes (FDi(Z)) mittels der Schreib-Lesestation (AKG) an die Lizenzchipkarte (LK) übertragen wird,
b) vom Prozessor (P) der Lizenzchipkarte (LK) für den Fall, daß die Anzahl freischaltbarer Anwenderchipkarten (AKn) im Speicher (S) noch nicht erschöpft ist, ein Freigabedatensatz (FDi(Z)) generiert und mittels der Schreib-Lesestation (AKG) an die Anwenderchipkarte (AKi) übertragen wird, und
c) vom Prozessor (P) der Anwenderchipkarte (AKi) der Freigabedatensatz zur Aktivierung des gesamten Satzes an zulässigen Anwenderbefehlsanweisungen des Betriebssystems in den zumindest das Betriebssystem der Anwenderchipkarte (AKi) enthaltenden nichtflüchtigen Speicher (S) für geladen wird.

3. Anordnung nach Anspruch 1 oder 2, wobei als Freigabedatensatz eine betriebssystemspezifische Kommandotabelle (KTB) im nichtflüchtigen Programmspeicher des Prozessors dient, womit die Zuordnung ( adr1 ... adr k ... adr n ) von Anwenderbefehlsanweisungen (AWBx) zu den diese jeweils ausführenden Teilen des Betriebssystems (BSC) der Anwenderchipkarte (AKi) hergestellt wird.

4. Anordnung mit Chipkarten (AK,LK), die jeweils mindestens einen internen Prozessor (P), mindestens eine Schreib-Lesestation (AKG) für Chipkarten (LK) und einen nichtflüchtigen Speicher (S) zumindest für ein Betriebssystem des Prozessors (P) aufweisen, mit
a) einer Vielzahl von Anwenderchipkarten (AKn), deren Prozessor (P) jeweils erst nach einer Freischaltung Anwenderbefehlsanweisungen ausführen kann,
b) zumindest einer Lizenzchipkarte (LK), in deren nichtflüchtigen Speicher (S) eine begrenzbare Anzahl von freischaltbaren Anwenderchipkarten (AKn) verwaltbar ist,
**dadurch gekennzeichnet,** daß
c) über die Schreib-Lesestation (AKG)
c1) die Freischaltung einer Anwenderchipkarte (AKi) durch Übertragung einer betriebssystemspezifischen Kommandotabelle (KTB) in den nichtflüchtigen Programmspeicher des Prozessors der Anwenderchipkarte (Aki) bewirkt wird, wenn im Speicher (S) der Lizenzchipkarte (LK) die Anzahl der freischaltbaren Anwenderchipkarten (Akn) noch nicht erschöpft ist, womit die Zuordnung ( adr1 ... adr k ... adr n ) von Anwenderbefehlsanweisungen (AWBx) zu den diese jeweils ausführenden Teilen des Betriebssystems (BSC) der Anwenderchipkarte (AKi) hergestellt wird, und
c2) im Speicher (S) der Lizenzchipkarte (LK) eine Dekrementierung der Anzahl freischaltbarer Anwenderchipkarten (Akn) bewirkt wird.

5. Anordnung nach einem der vorangegangenen Ansprüche, wobei die mindestens eine Lizenzchipkarte (LK) und die Anwenderchipkarten (AKn) hardwaremäßig identisch sind.

6. Anordnung nach einem der vorangegangenen Ansprüche, wobei der Datenaustausch zwischen einer Anwenderchipkarte (AKi) und der Lizenzchipkarte (LK) mittels der Schreib-Lesestation (AKG) in einer kryptologisch verschlüsselten Form erfolgt.

## Claims

1. Arrangement with chip cards (AK, LK), which in each case have at least one internal processor (P), at least one read-write station (AKG) for chip cards (LK) and a non-volatile memory (S) at least for an operating system of the processor (P), having
a) a multiplicity of user chip cards (AKn), the processor (P) of which can in each case execute user command instructions only after an activation,
b) at least one licence chip card (LK), in the non-volatile memory (S) of which a limitable number of activatable user chip cards (AKn) can be managed,
characterized in that
c) by means of the read-write station (AKG)
c1) for initiation of an activation, first of all a random number (Z) is generated by the processor (P) of a user chip card (AKi) and is transmitted by means of the read-write station (AKG) to the licence chip card (LK),
c2) in the event that the number of activatable user chip cards (AKn) in the memory (S) is not yet exhausted, an enabling identification (FDi (Z)), dependent on the respective random number (Z), is generated by the processor (P) of the licence chip card (LK) and is transmitted by means of the read-write station (AKG) to the user chip card (AKi), and
c3) the enabling identification (Fdi(Z)) is checked by the processor (P) of the user chip card (AKi) for correspondence with the random number (Z) and, if there is a positive outcome of the check, an activation of the entire set of permissible user command instructions is effected, and
c4) in the memory (S) of the licence chip card (LK) a decrementing of the number of activatable user chip cards (AKn) is effected.

2. Arrangement according to Claim 1, in which
a) for initiating an activation, first of all a request for transfer of an enabling data set (FDi (Z)) is transmitted by the processor (P) of a user chip card (AKi) by means of the read-write station (AKG) to the licence chip card (LK),
b) in the event that the number of activatable user chip cards (AKn) in the memory (S) is not yet exhausted, an enabling data set (FDi (Z)) is generated by the processor (P) of the licence chip card (LK) and is transmitted by means of the read-write station (AKG) to the user chip card (AKi), and
c) for activating the entire set of permissible user command instructions of the operating system, the enabling data set is loaded by the processor (P) of the user chip card (AKi) into the non-volatile memory (S) containing at least the operating system of the user chip card (AKi).

3. Arrangement according to Claim 1 or 2, a command table (KTB), specific to the operating system, in the non-volatile program memory of the processor serving as the enabling data set, whereby the assignment (adr 1 ... adr k ... adr n) of user command instructions (AWBx) to the parts of the operating system (BSC) of the user chip card (AKi) respectively executing the said instructions is established.

4. Arrangement with chip cards (AK, LK), which in each case have at least one internal processor (P), at least one read-write station (AKG) for chip cards (LK) and a non-volatile memory (S) at least for an operating system of the processor (P), having
a) a multiplicity of user chip cards (AKn), the processor (P) of which can in each case execute user command instructions only after an activation,
b) at least one licence chip card (LK), in the non-volatile memory (S) of which a limitable number of activatable user chip cards (AKn) can be managed,
characterized in that
c) by means of the read-write station (AKG)
c1) the activation of a user chip card (AKi) is effected by transmission of a command table (KTB), specific to the operating system, into the non-volatile program memory of the processor of the user chip card (AKi) if in the memory (S) of the licence chip card (LK) the number of activatable user chip cards (AKn) is not yet exhausted, whereby the assignment adr 1 ... adr k ... adr n) of user command instructions (AWBx) to the parts of the operating system (BSC) of the user chip card (AKi) respectively executing the said instructions is established, and
c2) in the memory (S) of the licenced chip card (LK) a decrementing of the number of activatable user chip cards (AKn) is effected.

5. Arrangement according to one of the preceding claims, the at least one licence chip card (LK) and the user chip cards (AKn) being identical in terms of hardware.

6. Arrangement according to one of the preceding claims, the data exchange between a user chip card (AKi) and the licence chip card (LK) by means of the read-write station (AKG) being performed in a cryptologically encoded form.

## Revendications

1. Système comprenant des cartes à puces (AK, LK) qui comportent chacune au moins un processeur interne (P), au moins une station d'écriture et de lecture (AKG) pour des cartes à puces (LK) et une mémoire non volatile (S) au moins pour un système d'exploitation du processeur (P),
comprenant
a) plusieurs cartes à puces d'utilisateurs (AKn) dont le processeur (P) peut exécuter des instructions de commandes d'utilisateur seulement après une validation,
b) au moins une carte à puce de licence (LK) dans la mémoire non volatile (S) de laquelle un nombre, pouvant être limité, de cartes à puces d'utilisateurs (AKn) pouvant être validées est géré,
caractérisé par le fait que
c) par l'intermédiaire de la station d'écriture et de lecture (AKG)
c1) le processeur (P) d'une carte à puce d'utilisateur (AKi) produit d'abord, pour déclencher une validation, un nombre aléatoire (Z) et le transmet au moyen de la station d'écriture et de lecture (AKG) à la carte à puce de licence (LK),
c2) si le nombre de cartes à puces d'utilisateurs (AKn) pouvant être validées n'est pas encore épuisé dans la mémoire (S), le processeur (P) de la carte à puce de licence (LK) produit un identificateur de validation (FDi (Z)) dépendant du nombre aléatoire (Z) respectif et le transmet au moyen de la station d'écriture et de lecture (AKG) à la carte à puce d'utilisateur (AKi), et
c3) le processeur (P) de la carte à puce d'utilisateur (AKi) teste la cohérence entre l'identificateur de validation (FDi(Z)) et le nombre aléatoire (Z) et provoque, dans le cas d'un résultat de test positif, une activation de l'ensemble du jeu d'instructions de commandes d'utilisateur autorisées, et
c4) une décrémentation du nombre de cartes à puces d'utilisateurs (AKn) pouvant être validées est activée dans la mémoire (S) de a carte à puce de licence (LK).

2. Système selon la revendication 1, dans lequel
a) le processeur (P) d'une carte à puce d'utilisateur (AKi) transmet d'abord au moyen de la station d'écriture et de lecture (AKG) à la carte à puce de licence (LK), pour déclencher une validation, une demande de transmission d'un jeu de données de validation (FDi(Z)),
b) si le nombre de cartes à puces d'utilisateurs (AKn) pouvant être validées n'est pas encore épuisé dans la mémoire (S), le processeur (P) de la carte à puce de licence (LK) produit un jeu de données de validation (FDi(Z)) et le transmet au moyen de la station d'écriture et de lecture (AKG) à la carte à puce d'utilisateur (AKi), et
c) le processeur (P) de la carte à puce d'utilisateur (AKi) charge le jeu de données de validation, servant à activer tout le jeu d'instructions de commandes d'utilisateur autorisées du système d'exploitation, dans la mémoire non volatile (S) contenant au moins le système d'exploitation de la carte à puce d'utilisateur (AKi).

3. Système selon la revendication 1 ou 2, dans lequel on utilise comme jeu de données de validation une table de commandes (KTB), spécifique au système d'exploitation, qui se trouve dans la mémoire de programmes non volatile du processeur et qui met en oeuvre l'attribution (adr 1, ..., adr k, ..., adr n) d'instructions de commandes d'utilisateur (AWB x) à des parties, exécutant respectivement ces instructions, du système d'exploitation (BSC) de la carte à puce d'utilisateur (AKi).

4. Système comprenant des cartes à puces (AK, LK) qui comportent chacune au moins un processeur interna (P), au moins une station d'écriture et de lecture (AKG) pour des cartes à puces (LK) et une mémoire non volatile (S) au moins pour un système d'exploitation du processeur (P), comprenant
a) plusieurs cartes à puces d'utilisateurs (AKn) dont le processeur (P) peut exécuter des instructions de commandes d'utilisateur seulement après une validation respective,
b) au moins une carte à puce de licence (LK) dans la mémoire non volatile (S) de laquelle un nombre, pouvant être limité, de cartes à puces d'utilisateurs (AKn) pouvant être validées est géré,
caractérisé par le fait que
c) par l'intermédiaire de la station d'écriture et de lecture (AKG)
c1) la validation d'une carte à puce d'utilisateur (AKi) est provoquée par la transmission d'une table de commandes (KTB), spécifique au système d'exploitation, dans la mémoire de programmes non volatile du processeur de la carte à puce d'utilisateur (AKi) si le nombre de cartes à puces d'utilisateurs (AKn) pouvant être validées n'est pas encore épuisé dans la mémoire (S) de la carte à puce de licence (LK), l'attribution (adr 1, ..., adr k, ..., adr n) d'instructions de commandes d'utilisateur (AWB x) aux parties, exécutant respectivement ces instructions, du système d'exploitation (BSC) de la carte à puce d'utilisateur (AKi) étant ainsi mise en oeuvre,
et
c2) une décrémentation du nombre de cartes à puces d'utilisateurs (AKn) pouvant être validées est effectuée dans la mémoire (S) de la carte à puce de licence (LK).

5. Système selon l'une des revendications précédentes, dans lequel la ou les cartes à puces de licence (LK) et les cartes à puces d'utilisateurs (AKn) sont identiques du point de vue du matériel.

6. Système selon l'une des revendications précédentes, dans lequel l'échange de données entre une carte à puce d'utilisateur (AKi) et la carte à puce de licence (LK) au moyen de la station d'écriture et de lecture (AKG) s'effectue sous une forme codée cryptée.
